# EUROPÄISCHE PATENTSCHRIFT

(11) **EP 2 938 515 B1**
(45) Veröffentlichungstag und Bekanntmachung des Hinweises auf die Patenterteilung: **28.11.2018**
(21) Anmeldenummer: 13815741.7
(22) Anmeldetag: 20.12.2013
(51) Int. Cl.: B60N 2/20, B60N 2/06

(54) **SITZVERSTELLVORRICHTUNG**
SEAT ADJUSTING DEVICE
DISPOSITIF DE RÉGLAGE POUR SIÈGE

(30) Priorität: 28.12.2012 DE 102012025211; 14.03.2013 DE 102013004342
(43) Veröffentlichungstag der Anmeldung: 04.11.2015
(73) Patentinhaber: Adient Luxembourg Holding S.à r.l., 1855 Luxembourg (LU)
(72) Erfinder: MEDVED, Andrej, 911 01 Trencin (SK)
(74) Vertreter: Loock, Jan Pieter
(86) Internationale Anmeldenummer: PCT/EP2013/077656
(87) Internationale Veröffentlichungsnummer: WO 2014/102185

(56) Entgegenhaltungen:
- FR-A1- 2 833 896
- JP-A- 2010 132 069

## Beschreibung

### Stand der Technik

Die vorliegende Erfindung geht aus von einer Sitzverstellvorrichtung zum Koppeln eines Lehnenneigungsverstellmechanismus mit einem Sitzlängspositionsfeststellmechanismus.

Solche Sitzverstellvorrichtungen sind als sogenannte "Easy-Entry"-Mechanismen bekannt. Dabei wird eine Kopplung zwischen dem Lehnenneigungsverstellmechanismus und dem Sitzlängspositionsfeststellmechanismus herbeigeführt, wobei die Kopplung gemäß den aus dem Stand der Technik bekannten Vorrichtungen linear über den gesamten Verstellweg vorgesehen ist.

Durch die lineare Kopplung kommt es bei Vibrationen oft zu störenden Geräuschen und/oder einer dauerhaften, geringfügigen Betätigung des Sitzlängspositionsfeststellmechanismus, wodurch die Beanspruchung und damit der Verschleiß der Sitzlängspositionsfeststellvorrichtung erhöht werden. Die FR2833896A weist eine Sitzverstellvorrichtung nach dem Oberbegriff des Anspruchs 1 auf.

### Offenbarung der Erfindung

Es ist die Aufgabe der vorliegenden Erfindung, eine Sitzverstellvorrichtung der eingangs genannten Art zur Verfügung zu stellen, bei der die Kopplung nicht über den gesamten Weg linear vorgesehen ist und die bauraumkompakt, einfach und sicher handhabbar ist und eine besonders einfache und kostengünstige Herstellung ermöglicht.

Gelöst wird diese Aufgabe mit einer Sitzverstellvorrichtung, insbesondere für einen Fahrzeugsitz, mit den Merkmalen des Anspruch 1.

Die erfindungsgemäße Sitzverstellvorrichtung hat gegenüber dem Stand der Technik den Vorteil, dass eine nicht-lineare Kopplung zwischen der Lehnenneigungsverstellvorrichtung und der Sitzlängspositionsfeststellvorrichtung ermöglicht wird, wobei die Kopplung durch ein einfach aufgebautes und bauraumkompaktes Kopplungsmittel vermittelt wird, wobei die Sitzverstellvorrichtung einfach und sicher handhabbar ist und besonders kostengünstig herstellbar ist. Außerdem wird in besonders vorteilhafter Weise eine weitere Betätigung der Sitzlängspositionsfeststellvorrichtung ab einer bestimmten Neigung der Lehne, d. h. einem bestimmten Neigungswinkel entsprechend einer bestimmten Betätigung der Lehnenneigungsverstellvorrichtung, vermieden, wodurch eine Betätigung der Sitzlängspositionsfeststellvorrichtung über das für die Ermöglichung einer Längsverschiebung notwendige Maß hinaus ausgeschlossen wird, was wiederum die Beanspruchung und den Verschleiß der Sitzlängspositionsfeststellvorrichtung verringert. Zudem ist die erfindungsgemäße Sitzverstellvorrichtung mit jeglichen bekannten Lehnenneigungsverstellvorrichtungen und/oder Sitzlängspositionsfeststellvorrichtungen kombinierbar, wodurch in vorteilhafter Weise die Flexibilität der Sitzverstellvorrichtung erhöht wird. Das Kopplungsmittel ist vorzugsweise modular ausgebildet, wobei insbesondere das erste und zweite Betätigungsmittel als jeweils separate Mittel ausgebildet sind, wodurch vorteilhafterweise die Modularität der Sitzverstellvorrichtung und damit deren vielseitige Einsetzbarkeit erhöht wird. Besonders bevorzugt weisen das erste Betätigungsmittel und das zweite Betätigungsmittel jeweils im Wesentlichen eine Haupterstreckungsebene auf, d. h. das erste Betätigungsmittel und das zweite Betätigungsmittel sind im Wesentlichen flächig ausgebildet, wobei ganz besonders bevorzugt die Haupterstreckungsebene des ersten Betätigungsmittels parallel zu der Haupterstreckungsebene des zweiten Betätigungsmittels ist. Noch mehr bevorzugt sind die Haupterstreckungsebene des ersten Betätigungsmittels und die Haupterstreckungsebene des zweiten Betätigungsmittels nicht in einer gemeinsamen Ebene angeordnet. Der Lehnenteil umfasst insbesondere einen Lehnenrahmen des Fahrzeugsitzes und insbesondere ein Seitenteil des Lehnenrahmens.

Vorteilhafte Ausführungsformen sind der Figurenbeschreibung und/oder den Zeichnungen zu entnehmen.

Gemäß einer bevorzugten Ausführungsform ist die Führungsfläche wenigstens teilweise gekrümmt, insbesondere ist wenigstens ein Abschnitt konkav und/oder wenigstens ein Abschnitt konvex gekrümmt. Hierdurch ist es in vorteilhafter Weise möglich, über die Führung des ersten Betätigungsmittels an der Führungsfläche des zweiten Betätigungsmittels entlang eine nicht-lineare Kopplung in einfacher Weise zu realisieren. Zudem können durch Variation der Krümmung in vorteilhafter Weise verschiedene Kopplungen, insbesondere verschiedene Kopplungskennlinien, realisiert werden.

Gemäß einer bevorzugten Ausführungsform ist die Sitzverstellvorrichtung derart konfiguriert, dass bei einer Betätigung der Lehnenneigungsverstellvorrichtung das erste Betätigungsmittel mit der Führungsfläche des zweiten Betätigungsmittels derart zusammenwirkt, dass ab einer kritischen Verstellposition des ersten Betätigungsmittels die Position des zweiten Betätigungsmittels konstant ist. Hierdurch ist es in besonders vorteilhafter Weise möglich, eine unnötige Beanspruchung und/oder Betätigung der Sitzlängspositionsfeststellvorrichtung zu vermeiden. Insbesondere ist es somit möglich, dass die Sitzlängspositionsfeststellvorrichtung nur so weit betätigt wird, dass der Feststellmechanismus gerade gelöst wird, ohne darüber hinaus eine weitere und damit unnötige Betätigung vorzunehmen. Besonders bevorzugt ist die Führungsfläche derart ausgebildet, dass bei einer Bewegung des ersten Betätigungsmittels über die kritische Verstellposition hinaus die Position des zweiten Betätigungsmittels konstant ist, insbesondere relativ zu einer Sitzfläche des Sitzes oder einem anderen Sitzteil, wobei das Sitzteil nicht drehfest mit der Lehne verbunden ist.

Erfindungsgemäß weist das erste Betätigungsmittel einen Vorsprung, insbesondere einen zylinderförmigen Vorsprung auf, wobei der Vorsprung vorzugsweise senkrecht auf der Haupterstreckungsebene des ersten Betätigungsmittel angeordnet ist, wobei der Vorsprung mit der Führungsfläche des zweiten Betätigungsmittels zusammenwirkbar vorgesehen ist. Hierdurch ist es in vorteilhafter Weise möglich, dass das erste und zweite Betätigungsmittel parallel zueinander versetzt angeordnet sind und dennoch eine Kopplung beziehungsweise ein Zusammenwirken ermöglicht wird. Hierdurch wird vorteilhafterweise eine bauraumkompakte Sitzverstellvorrichtung ermöglicht. Besonders bevorzugt ist ein zylindermantelförmiges Rollmittel umfänglich um den Vorsprung angeordnet, wobei insbesondere der Vorsprung und das Rollmittel eine gemeinsame Mittelachse aufweisen, wobei das Rollmittel um den Vorsprung drehbar gelagert ist. Hierdurch wird in besonders vorteilhafter Weise ein möglichst verschleißfreies und reibungsarmes Zusammenwirken des ersten Betätigungsmittels mit dem zweiten Betätigungsmittel ermöglicht.

Gemäß einer bevorzugten Ausführungsform ist das erste Betätigungsmittel kraft-, form- und/oder stoffschlüssig mit der Lehnenneigungsverstellvorrichtung verbunden, insbesondere ist das erste Betätigungsmittel mit der Lehnenneigungsverstellvorrichtung verschweißt. Besonders bevorzugt ist das erste Betätigungsmittel mit der Lehnenneigungsverstellvorrichtung drehfest verbunden, ganz besonders bevorzugt ist das erste Betätigungsmittel mit der Lehnenneigungsverstellvorrichtung über die Drehachse der Lehnenneigungsverstellvorrichtung verbunden. Hierdurch wird in vorteilhafter Weise eine stabile und einfache, insbesondere starre, Kopplung des ersten Betätigungsmittels mit der Lehnenneigungsverstellvorrichtung ermöglicht.

Gemäß einer bevorzugten Ausführungsform ist das zweite Betätigungsmittel mit einem Sitzteil und/oder einem Beschlagteil des Sitzteils form-, kraft- und/oder stoffschlüssig verbunden und mit der Sitzlängspositionsfeststellvorrichtung form-, kraft- und/oder stoffschlüssig verbunden, insbesondere ist das zweite Betätigungsmittel drehbar über eine senkrecht zu der Haupterstreckungsebene stehenden Drehachse mit dem Sitzteil und/oder mit dem Beschlagteil des Sitzteils verbunden. Besonders bevorzugt weist das zweite Betätigungsmittel eine Haupterstreckungsrichtung in der Haupterstreckungsebene auf und ist an einem Ende der Haupterstreckungsrichtung mit dem Sitzteil und/oder dem Beschlagteil des Sitzteils drehbar verbunden und an dem anderen Ende der Haupterstreckungsrichtung mit der Sitzlängspositionsfeststellvorrichtung verbunden. Ganz besonders bevorzugt ist entlang der Drehachse zwischen dem zweiten Betätigungsmittel und dem Sitzteil und/oder dem Beschlagteil des Sitzteils ein Abstandshaltemittel angeordnet, insbesondere ein rollenförmiger Hohlkörper. Hierdurch ist es in vorteilhafter Weise möglich, eine Bewegung des ersten Betätigungsmittels mit einer Bewegung des zweiten Betätigungsmittels zu koppeln und durch eine Drehung des zweiten Betätigungsmittels um die Drehachse eine Betätigung der Sitzlängspositionsfeststellvorrichtung zu bewirken, wobei insbesondere eine Umsetzung der Kopplungen möglich ist, in dem Sinne, dass das Betätigungsmittel als Hebel fungiert und eine kleine Drehung um die Drehachse einen vergleichsweise großen Betätigungsweg der Sitzlängspositionsfeststellvorrichtung bewirkt.

Gemäß einer bevorzugten Ausführungsform weisen das erste Betätigungsmittel und das zweite Betätigungsmittel in einer Ausgangsstellung keine gemeinsamen Berührungspunkte auf, insbesondere weist in der Ausgangsstellung das erste Betätigungsmittel keine Berührungspunkte mit der Führungsfläche des zweiten Betätigungsmittels auf, wobei ein Zusammenwirken des ersten Betätigungsmittels mit dem zweiten Betätigungsmittel, insbesondere mit der Führungsfläche des zweiten Betätigungsmittels, erst ab einem Mindestverstellweg des ersten Betätigungsmittels vorgesehen ist. Hierdurch ist es in vorteilhafter Weise möglich, durch Vibrationen oder geringfügige Lehnenneigungsanpassungen bedingte Betätigungen der Sitzlängspositionsfeststellvorrichtung auszuschließen.

### Kurze Beschreibung der Zeichnungen

- **Figur** 1: zeigt eine schematische Perspektivansicht einer Sitzverstellvorrichtung gemäß einer beispielhaften Ausführungsform der vorliegenden Erfindung.
- **Figur** 2: zeigt eine schematische Ansicht einer Sitzverstellvorrichtung gemäß der beispielhaften Ausführungsform der vorliegenden Erfindung.
- **Figur** 3: zeigt eine weitere schematische Perspektivansicht einer Sitzverstellvorrichtung gemäß der beispielhaften Ausführungsform der vorliegenden Erfindung.
- **Figur** 4: zeigt eine schematische Detailansicht des ersten Betätigungsmittels einer Sitzverstellvorrichtung gemäß einer beispielhaften weiteren Ausführungsform der vorliegenden Erfindung.
- **Figuren 5a bis 5d**: zeigen schematische Ansichten einer Sitzverstellvorrichtung gemäß der beispielhaften Ausführungsform der vorliegenden Erfindung in verschiedenen Stellungen.
- **Figur** 6: zeigt ein Diagramm mit einem Vergleich einer erfindungsgemäßen Kopplung mit einer Kopplung gemäß dem Stand der Technik.
- **Figuren 7a bis 7d**: zeigen schematische Nahansichten einer Sitzverstellvorrichtung gemäß der beispielhaften Ausführungsform der vorliegenden Erfindung in verschiedenen Stellungen.

### Ausführungsformen der Erfindung

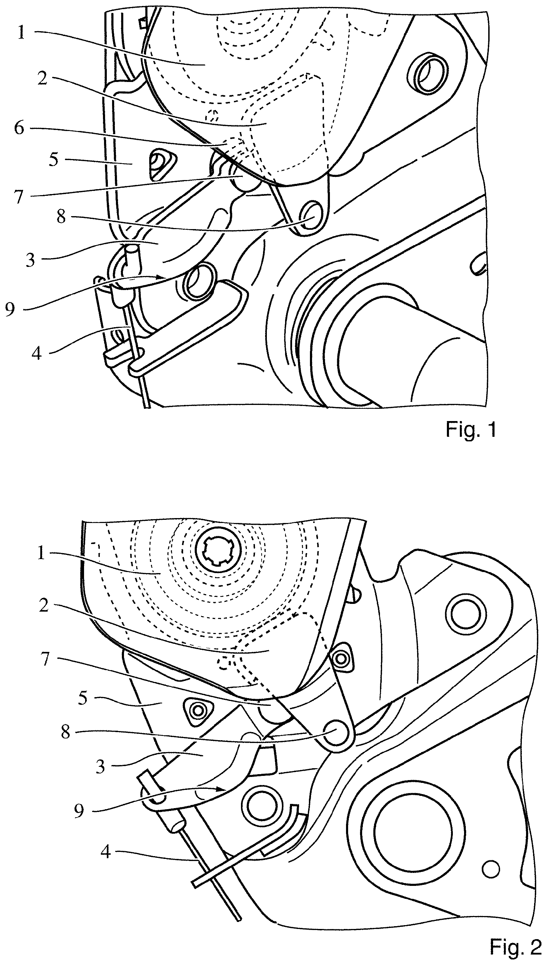

In **Figur 1** ist eine schematische Perspektivansicht einer Sitzverstellvorrichtung gemäß einer beispielhaften Ausführungsform der vorliegenden Erfindung dargestellt. Eine solche Sitzverstellvorrichtung ist beispielsweise für Fahrzeugsitze bestimmt, insbesondere Kraftfahrzeugsitze. Der Übersichtlichkeit halber ist ein solcher Fahrzeugsitz hier nicht dargestellt. Eine Lehnenneigungsverstellvorrichtung 1, insbesondere ein Rastklinkenversteller und/oder ein Taumelversteller, ist derart mit einem Beschlagteil 5 einer Sitzfläche und mit einer Lehne eines Sitzes verbunden, dass bei einer Betätigung der Lehnenneigungsverstellvorrichtung 1 die Lehne relativ zu der Sitzfläche geneigt wird, insbesondere um eine Drehachse rotiert wird.

Eine Sitzlängspositionsfeststellvorrichtung 4 ist mit dem Sitz derart verbunden, dass bei einer Betätigung der Sitz in Längsrichtung verschiebbar ist, insbesondere auf Schienen verschiebbar ist, wobei der Sitz mit Oberschienen verbunden ist, die auf Unterschienen verschiebbar angeordnet sind. Es ist auch bekannt, Memory-Elemente vorzusehen, die nach einer Verschiebung des Sitzes eine Rückstellung in die ursprüngliche Position ermöglichen. Üblicherweise sind derartige Sitzlängspositionsfeststellvorrichtungen 4 so vorgesehen, dass ein vorbestimmter Betätigungsweg überwunden werden muss, bis der Sitz zu einer Längsverschiebung freigegeben ist. Dies ist aus Sicherheitsgründen vorgesehen, damit unabsichtliche Betätigungen oder Vibrationen nicht zu einer Freigabe des Sitzes bezüglich einer Längsverschiebung führen, denn bei einer unabsichtlichen Längsverschiebung kann der Fahrer die Kontrolle über das Fahrzeug verlieren, was eine erhebliche Gefährdung sowohl des Fahrers als auch seiner Umwelt bedeutet. Ist der vorbestimmte Betätigungsweg überwunden, ist jede weitere Betätigung, insbesondere jeder zusätzliche Betätigungsweg der Sitzlängspositionsfeststellvorrichtung 4 nicht mehr notwendig und belastet das Material und den Mechanismus. Eine Feststellung des Sitzes bezüglich einer Längsverschiebung ist gemäß dem Stand der Technik unterhalb des Sitzes vorgesehen, weshalb die eigentliche Sitzlängspositionsfeststellvorrichtung 4 mit Umlenkmitteln wie Seilzügen, insbesondere Bowdenzügen, derart verbunden ist, dass eine Betätigung an einer für den Sitzinsassen bequem zu erreichenden Stelle erfolgen kann. Im Sinne dieser Anmeldung sollen unter einer Sitzlängspositionsfeststellvorrichtung 4 jedoch auch derartige Umlenkmittel verstanden werden, mithin sollen unter einer Sitzlängspositionsfeststellvorrichtung 4 alle technischen Mittel verstanden werden, die einer Freigabe beziehungsweise Feststellung eines Sitzes oder eines Sitzteils bezüglich einer Verschiebung, insbesondere einer Längsverschiebung, direkt oder indirekt dienen.

Ein Kopplungsmittel der Sitzverstellvorrichtung verbindet die Lehnenneigungsverstellvorrichtung 1 mit der Sitzlängspositionsfeststellvorrichtung 4 miteinander, dass bei einer Betätigung der Lehnenneigungsverstellvorrichtung 1 auch die Sitzlängspositionsfeststellvorrichtung 4 betätigt wird. Das Kopplungsmittel weist ein erstes Betätigungsmittel 2 und ein zweites Betätigungsmittel 3 auf, wobei das erste Betätigungsmittel 2 mit der Lehnenneigungsverstellvorrichtung 1 drehfest verbunden ist und das zweite Betätigungsmittel 3 mit der Sitzlängspositionsfeststellvorrichtung 4 in geeigneter Weise verbunden ist. Hier weist das zweite Betätigungsmittel 3 ein Loch auf, wobei ein Haken der Sitzlängspositionsfeststellvorrichtung 4 über das Loch formschlüssig mit dem zweiten Betätigungsmittel 3 verbunden ist. Es sind jedoch auch andere Verbindungen zwischen der Sitzlängspositionsfeststellvorrichtung 4 und dem zweiten Betätigungsmittel 3 vorstellbar, beispielsweise eine stoffschlüssige Verbindung, insbesondere eine Verschweißung. Das erste Betätigungsmittel 2 ist hier stoffschlüssig mit der Lehnenneigungsverstellvorrichtung 1 verbunden, insbesondere ist das erste Betätigungsmittel 2 mit der Lehnenneigungsverstellvorrichtung 1 verschweißt. Das erste Betätigungsmittel 2 kann dabei je nach Art der Lehnenneigungsverstellvorrichtung 1 an verschiedenen Stellen mit der Lehnenneigungsverstellvorrichtung 1 verbunden sein. Hier ist das erste Betätigungsmittel 2 an einem äußeren Bereich der Lehnenneigungsverstellvorrichtung 1 angebracht, ebenso gut ist es gemäß einer weiteren Ausführungsform über das Zentrum, also nahe der Drehachse oder über die Drehachse der Lehnenneigungsverstellvorrichtung 1 drehfest mit der Lehnenneigungsverstellvorrichtung 1 verbunden.

Das erste Betätigungsmittel 2 und das zweite Betätigungsmittel 3 weisen eine im Wesentlichen flächige Form auf, d. h. sie weisen eine Haupterstreckungsebene und auch eine Haupterstreckungsrichtung in der Haupterstreckungsebene auf. Die genaue Form des ersten Betätigungsmittels 2 ist flexibel gestaltbar, beispielsweise in Abhängigkeit der Lehnenneigungsverstellvorrichtung 1 und/oder des Sitzes und/oder der Sitzlängspositionsfeststellvorrichtung 4. Das erste Betätigungsmittel 2 ist mit seiner Haupterstreckungsrichtung radial zu der Drehachse der Lehnenneigungsverstellvorrichtung 1 angeordnet. Hier weist das erste Betätigungsmittel 2 einen Vorsprung 8 auf, wobei der Vorsprung 8 vorzugsweise als Bolzen ausgebildet ist, wobei der Bolzen durch ein entsprechendes Loch des Betätigungsmittels 2 gesteckt und kraft-, form- und/oder stoffschlüssig mit dem ersten Betätigungsmittel 2 verbunden ist. Alternativ ist der Vorsprung 8 ein zylinderförmiger Körper, der senkrecht auf der Haupterstreckungsebene des ersten Betätigungsmittels 2 stehend mit diesem verbunden, insbesondere verschweißt ist.

Der Vorsprung 8 ist nahe des von der Drehachse der Lehnenneigungsverstellvorrichtung 1 entfernten Endes des ersten Betätigungsmittels 2 angeordnet um einen relativ großen Verstellweg auch bei vergleichsweise kleinen Neigungswinkeln der Lehnenneigungsverstellvorrichtung 1 zu ermöglichen, wodurch auch bei geringen Betätigungen der Lehnenneigungsverstellvorrichtung 1 eine Kopplung mit der Sitzlängspositionsfeststellvorrichtung 4 erfolgt. Der Vorsprung 8 ragt in Richtung des zweiten Betätigungsmittels 3. Das zweite Betätigungsmittel 3 ist mit seiner Haupterstreckungsebene parallel zu der Haupterstreckungsebene des ersten Betätigungsmittels 2 angeordnet, wobei das zweite Betätigungsmittel 3 in Richtung entlang der Drehachse der Lehnenneigungsverstellvorrichtung 1 versetzt zu dem ersten Betätigungsmittel 2 angeordnet ist.

Das zweite Betätigungsmittel 3 ist an einem Ende seiner Haupterstreckungsrichtung drehbar mit dem Beschlagteil 5 des Sitzes verbunden, wobei die Verbindung mit dem Beschlagteil 5 an dem der Verbindung zu der Sitzlängspositionsfeststellvorrichtung 4 entgegengesetzten Ende bezüglich der Haupterstreckungsrichtung erfolgt. Hier ist die drehbare Verbindung über einen Bolzen 7 ausgeführt. Um eine möglichst reibungsfreie Bewegung relativ zu dem Beschlagteil 5 oder anderen Sitzteilen zu ermöglichen, ist zwischen dem Beschlagteil 5 und dem zweiten Betätigungsmittel 3 ein Abstandshaltemittel 6 angeordnet. Dieses ist beispielsweise als ringförmiger Körper ausgebildet und ermöglicht eine weitgehend reibungsfreie Drehung des zweiten Betätigungsmittels 3 um seine Drehachse relativ zum Beschlagteil 5. Das zweite Betätigungsmittel 3 weist eine Führungsfläche 9 auf, die senkrecht zu der Haupterstreckungsebene angeordnet ist. Ab einem gewissen Mindestverstellweg befindet sich der Vorsprung 8 in Anlage mit der Führungsfläche 9. Die Führungsfläche 9 weist eine Krümmung auf, hier eine konvexe Krümmung. Die Krümmung ist unregelmäßig, in dem Sinne, dass die Krümmung der Führungsfläche 9 in einem ersten Bereich einen anderen gedachten Radius aufweist als in einem zweiten Bereich. Alternativ sind mehr als zwei Bereiche verschiedener Krümmungen vorgesehen.

In **Figur 2** ist eine schematische Ansicht einer Sitzverstellvorrichtung gemäß der beispielhaften Ausführungsform der vorliegenden Erfindung dargestellt. Die Ansicht entspricht einer seitlichen Aufsicht auf die Sitzverstellvorrichtung. Es sind die gleichen Elemente wie in Figur 1 dargestellt und die Sitzverstellvorrichtung ist in der gleichen Stellung gezeigt.

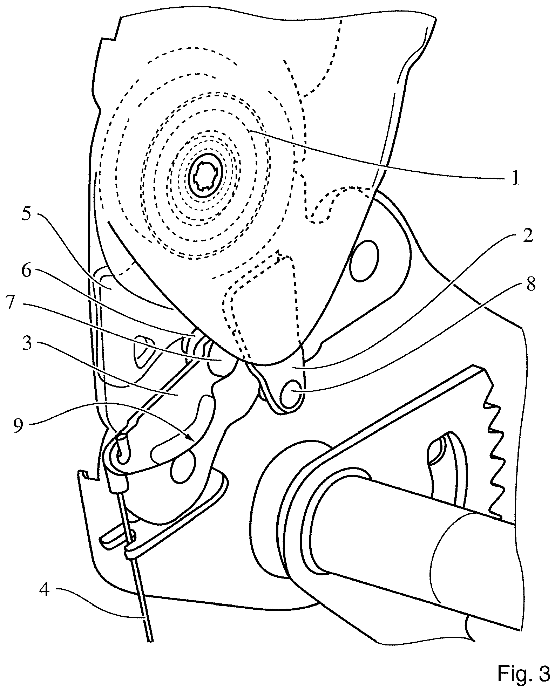

In **Figur 3** ist eine weitere schematische Perspektivansicht einer Sitzverstellvorrichtung gemäß der beispielhaften Ausführungsform der vorliegenden Erfindung dargestellt. Zur besseren Übersichtlichkeit sind die einzelnen Elemente der Sitzverstellvorrichtung hervorgehoben. Davon abgesehen entspricht Figur 3 im Wesentlichen Figur 1 und Figur 2.

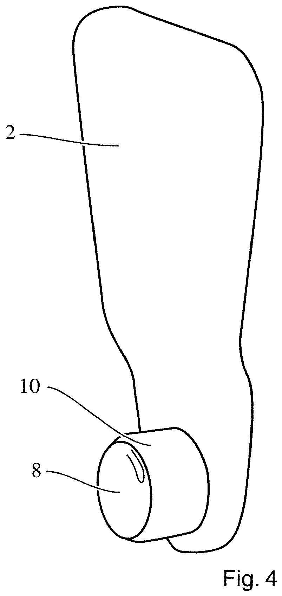

In **Figur 4** ist eine schematische Detailansicht des ersten Betätigungsmittels 2 einer Sitzverstellvorrichtung gemäß einer beispielhaften weiteren Ausführungsform der vorliegenden Erfindung dargestellt. Dabei entspricht die beispielhafte weitere Ausführungsform im Wesentlichen der zuvor beschriebenen Ausführungsform, wobei um den Vorsprung 8 herum ein Rollmittel 10 angeordnet ist. Das Rollmittel 10 ist vorzugsweise als Hohlzylinder, d. h. im Wesentlichen zylindermantelförmig, ausgebildet, der insbesondere formschlüssig mit dem Vorsprung 8 verbunden ist. Das Rollmittel 10 weist eine gemeinsame Mittelachse mit dem Vorsprung 8 auf. Das Rollmittel 10 ist um die Mittelachse drehbar vorgesehen. Insbesondere dreht sich das Rollmittel 10, wenn es sich in Anlage mit der Führungsfläche 9 befindet, und vermindert somit den durch Haftreibung bedingten Verschleiß des Vorsprungs 8 und der Führungsfläche 9.

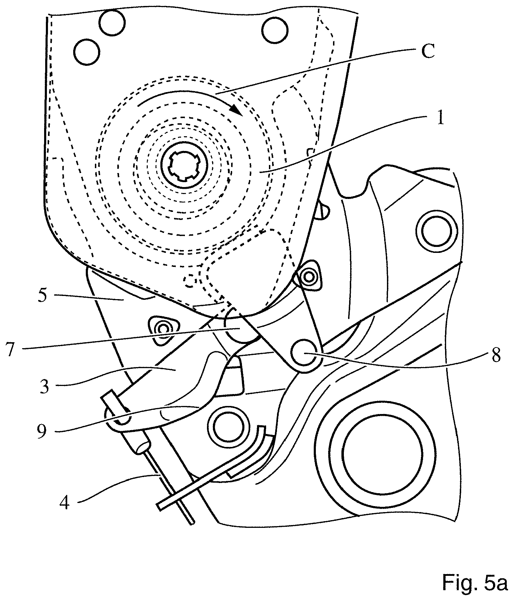

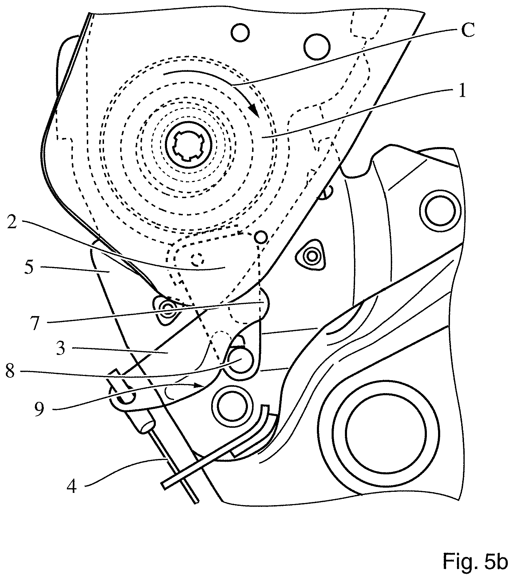

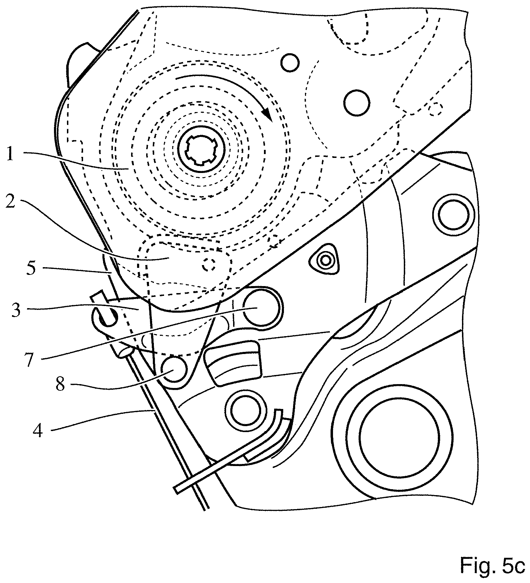

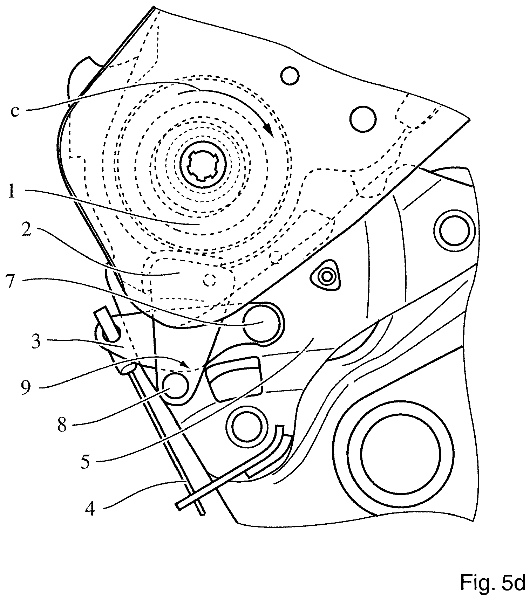

In den **Figuren 5a bis 5d** sind schematische Ansichten einer Sitzverstellvorrichtung gemäß der beispielhaften Ausführungsform der vorliegenden Erfindung in verschiedenen Stellungen dargestellt. Die in Figur 5a dargestellte Stellung der Sitzverstellvorrichtung entspricht dabei der in den Figuren 1 bis 3 gezeigten Stellung. Die Drehrichtung der Lehnenneigungsverstellvorrichtung 1 ist mit einem Pfeil C gekennzeichnet. In Figur 5b ist die Stellung der Sitzverstellvorrichtung gezeigt, in der der Vorsprung 8 gerade in Anlage mit der Führungsfläche 9 gelangt. Zwischen der in Figur 5a gezeigten und der in Figur 5b gezeigten Stellung der Sitzverstellvorrichtung hat die Betätigung der Lehnenneigungsverstellvorrichtung 1 nur eine entsprechende Bewegung des ersten Betätigungsmittels 2 und damit des Vorsprungs 8 bewirkt, d. h. insbesondere, dass die Position des zweiten Betätigungsmittels 3 unverändert ist. Ab der in Figur 5b gezeigten Stellung bis zu der in Figur 5c gezeigten Stellung bewirkt die Neigung der Lehne eine Bewegung des ersten Betätigungsmittels 2 und über die Kopplung zwischen dem ersten Betätigungsmittel 2 und dem zweiten Betätigungsmittel 3 (über den Vorsprung 8 und die Führungsfläche 9) eine Drehbewegung des zweiten Betätigungsmittels 3 um seine Drehachse (über den Bolzen 7). Diese Drehbewegung führt zu einer Auslenkung der Sitzlängspositionsfeststellvorrichtung 4. Die in Figur 5c gezeigte Stellung entspricht dabei einer kritischen Verstellposition sowohl des ersten Betätigungsmittels 2 als auch des zweiten Betätigungsmittels 3. Bei einer Bewegung des ersten Betätigungsmittels 2 über die kritische Verstellposition hinaus, bis zu einer maximalen Verstellposition, die in Figur 5d gezeigt ist, bleibt die Position des zweiten Betätigungsmittels 3 unverändert. Dies wird durch die entsprechend ausgebildete Krümmung der Führungsfläche 9 ermöglicht. In der kritischen Verstellposition fällt insbesondere der Mittelpunkt des gedachten Radius der Krümmung der Führungsfläche 9 auf die Drehachse der Lehnenneigungsverstellvorrichtung 1. Dadurch entspricht die Bewegung des Vorsprungs 8, beziehungsweise des ersten Betätigungsmittels 2, entlang der Führungsfläche 9 im Wesentlichen der Bewegung entlang eines Kreisbogens. Die kritische Verstellposition entspricht dabei derjenigen Position, in der die Sitzlängspositionsfeststellvorrichtung 4 gerade eine Verstellung des Sitzes in Längsrichtung ermöglicht. Eine darüber hinausgehende, nachteilige Bewegung wird daher ausgeschlossen.

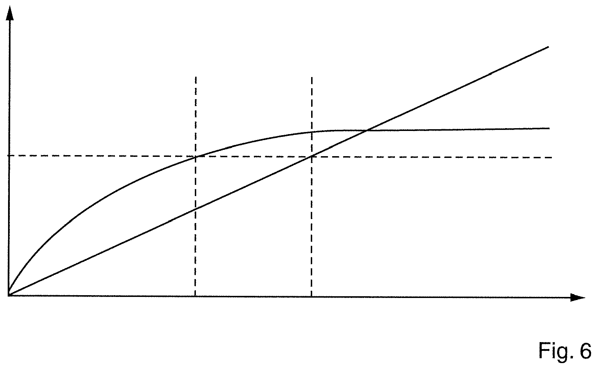

In **Figur** 6 ist ein Diagramm mit einem Vergleich einer erfindungsgemäßen Kopplung mit einer Kopplung gemäß dem Stand der Technik dargestellt. Auf der vertikalen Achse (d. h. der Ordinate) ist der Betätigungsweg der Sitzlängspositionsfeststellvorrichtung 4 abgebildet und auf der horizontalen Achse (d. h. der Abszisse) ist der Neigungswinkel der Lehne abgebildet. Die horizontale, gestrichelte Linie entspricht dem Betätigungsweg, der notwendig ist, um den Sitz für eine Längsverschiebung freizugeben. Die diagonal verlaufende gerade Linie entspricht einer linearen Kopplung gemäß dem Stand der Technik und die gekrümmte Kurve stellt den Kopplungsverlauf gemäß einer beispielhaften Ausführungsform der erfindungsgemäßen Sitzverstellvorrichtung dar. Durch vertikale, gestrichelte Linien wird verdeutlicht, bei welchem Neigungswinkel die Sitzlängspositionsfeststellvorrichtung 4 den Sitz zu einer Längsverschiebung freigibt. Es ist zu erkennen, dass dies erfindungsgemäß früher der Fall ist als gemäß dem Stand der Technik. Außerdem ist auf der rechten Seite zu sehen, dass die den Kopplungsverlauf gemäß der beispielhaften Ausführungsform der erfindungsgemäßen Sitzverstellvorrichtung symbolisierende Kurve weitgehend parallel zu der eine Freigabe des Sitzes bezüglich einer Längsverschiebung symbolisierenden, horizontalen, gestrichelten Linie verläuft. Während bei dem Kopplungsverlauf gemäß dem Stand der Technik ein mit zunehmender Lehnenneigung zunehmender, nicht mehr der Freigabe des Sitzes bezüglich einer Längsverschiebung dienender, Betätigungsweg erfolgt, wird gemäß der beispielhaften Ausführungsform ein maximaler Betätigungsweg B erreicht, der entsprechend angepasst werden kann, beispielsweise durch entsprechende Ausgestaltung der Krümmung der Führungsfläche 9 des zweiten Betätigungsmittels 3.

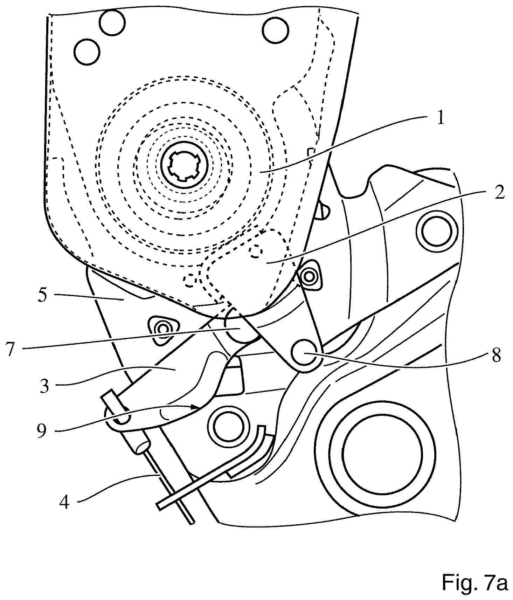

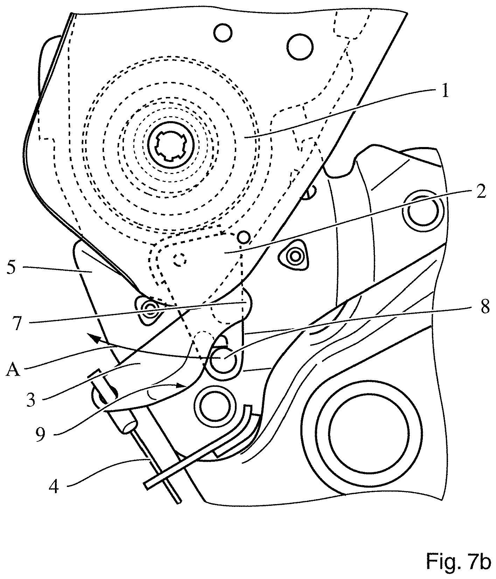

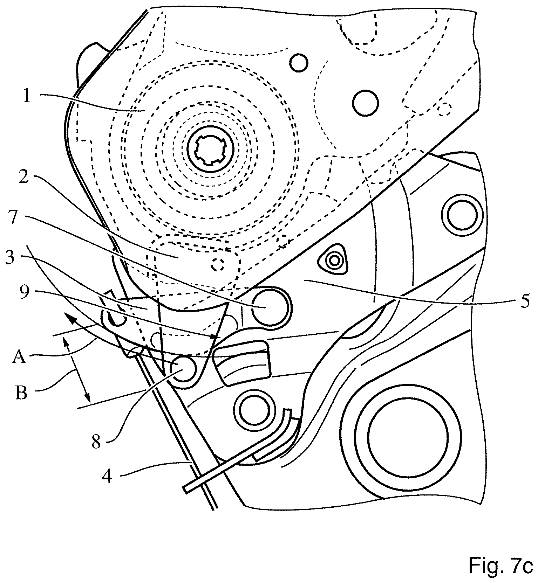

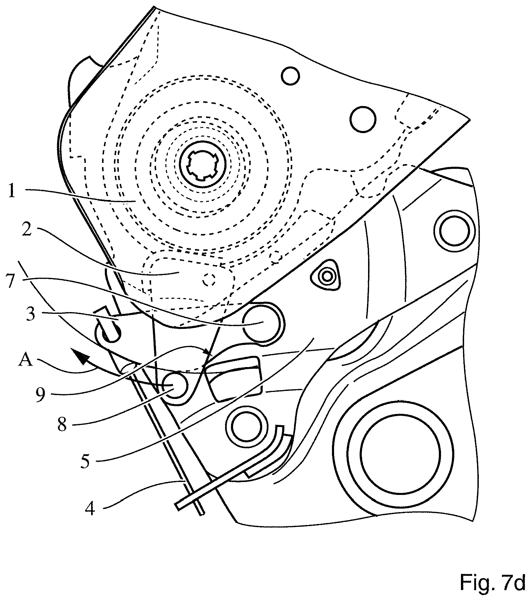

In den **Figuren 7a bis 7d** sind schematische Nahansichten einer Sitzverstellvorrichtung gemäß der beispielhaften Ausführungsform der vorliegenden Erfindung in verschiedenen Stellungen dargestellt. Die Figuren 7a bis 7d entsprechen im Wesentlichen den Figuren 5a bis 5d, wobei hier die Drehrichtung der Lehnenneigungsverstellvorrichtung 1 nicht eingezeichnet ist, sondern stattdessen die Bewegungsrichtung A des ersten Betätigungsmittels 2 durch Pfeile dargestellt ist. In Figur 7c ist darüber hinaus der maximale Betätigungsweg B der Sitzlängspositionsfeststellvorrichtung 4 eingezeichnet. Dieser maximale Betätigungsweg B entspricht dabei dem Betätigungs- oder Verstellweg, der notwendig ist, um eine Längsverschiebung des Sitzes freizugeben. Alternativ entspricht der maximale Betätigungsweg B dem für eine Freigabe einer Längsverschiebung des Sitzes notwendigen Betätigungsweg und einer zusätzlichen Strecke, die beispielsweise zum Toleranzausgleich dient und sicherstellt, dass auch bei Belastungen, Vibrationen oder nach einer langen Gebrauchszeit die Sitzlängspositionsfeststellvorrichtung 4 zuverlässig freigegeben wird.

### Bezugszeichenliste

- 1: Lehnenneigungsverstellvorrichtung
- 2: erstes Betätigungsmittel
- 3: zweites Betätigungsmittel
- 4: Sitzlängspositionsfeststellvorrichtung
- 5: Beschlagteil
- 6: Abstandshaltemittel
- 7: Verbindungsbolzen
- 8: Vorsprung
- 9: Führungsfläche
- 10: Rollmittel
- A: Bewegungsrichtung des ersten Betätigungsmittels
- B: maximaler Betätigungsweg
- C: Drehrichtung Lehnenneigungsverstellvorrichtung

## Patentansprüche

1. Sitzverstellvorrichtung, insbesondere für einen Fahrzeugsitz, wobei die Sitzverstellvorrichtung ein Kopplungsmittel zur Kopplung einer Lehnenneigungsverstellvorrichtung (1) an eine Sitzlängspositionsfeststellvorrichtung (4) aufweist, wobei das Kopplungsmittel wenigstens ein erstes Betätigungsmittel (2) und ein zweites Betätigungsmittel (3) aufweist, wobei das zweite Betätigungsmittel (3) eine Führungsfläche (9) aufweist, wobei das erste Betätigungsmittel (2) mit der Lehnenneigungsverstellvorrichtung (1) oder einem Lehnenteil verbunden ist, wobei das zweite Betätigungsmittel (3) mit der Sitzlängspositionsfeststellvorrichtung (4) verbunden ist und wobei das Kopplungsmittel derart konfiguriert ist, dass bei einer Betätigung der Lehnenneigungsverstellvorrichtung (1) das erste Betätigungsmittel (2) mit der Führungsfläche (9) des zweiten Betätigungsmittels (3) zur Betätigung der Sitzlängspositionsfeststellvorrichtung (4) zusammenwirkt,
**dadurch gekennzeichnet, dass** das erste Betätigungsmittel (2) einen Vorsprung (8) aufweist, wobei der Vorsprung (8) mit der Führungsfläche (9) des zweiten Betätigungsmittels (3) zusammenwirkbar vorgesehen ist, wobei sich der Vorsprung (8) ab einem gewissen Mindestverstellweg in Anlage mit der Führungsfläche (9) befindet und wobei die Führungsfläche (9) eine unregelmäßige Krümmung aufweist.

2. Sitzverstellvorrichtung nach einem Anspruch 1, wobei das Kopplungsmittel modular ausgebildet ist, wobei insbesondere das erste und zweite Betätigungsmittel (2, 3) als separate Mittel ausgebildet sind.

3. Sitzverstellvorrichtung nach einem der vorhergehenden Ansprüche, wobei das erste Betätigungsmittel (2) und das zweite Betätigungsmittel (3) jeweils im Wesentlichen flächig ausgebildet sind, wobei bevorzugt eine Haupterstreckungsebene des ersten Betätigungsmittels (2) parallel zu einer Haupterstreckungsebene des zweiten Betätigungsmittels (3) ausgebildet ist.

4. Sitzverstellvorrichtung nach Anspruch 3, wobei die Haupterstreckungsebene des ersten Betätigungsmittels (2) und die Haupterstreckungsebene des zweiten Betätigungsmittels (3) zueinander beabstandet sind.

5. Sitzverstellvorrichtung nach einem der vorhergehenden Ansprüche, wobei die Sitzverstellvorrichtung derart ausgebildet ist, dass bei einer Betätigung der Lehnenneigungsverstellvorrichtung (1) das erste Betätigungsmittel (2) mit der Führungsfläche (9) des zweiten Betätigungsmittels (3) derart zusammenwirkt, dass ab einer kritischen Verstellposition des ersten Betätigungsmittels (2) die Position des zweiten Betätigungsmittels (3) konstant bleibt.

6. Sitzverstellvorrichtung nach einem der vorhergehenden Ansprüche, wobei der Vorsprung (8) senkrecht auf der Haupterstreckungsebene des ersten Betätigungsmittels (2) angeordnet ist.

7. Sitzverstellvorrichtung nach Anspruch 6, wobei ein zylindermantelförmiges Rollmittel (10) umfänglich um den Vorsprung (8) angeordnet ist.

8. Sitzverstellvorrichtung nach Anspruch 7, wobei der Vorsprung (8) und das Rollmittel (10) eine gemeinsame Mittelachse aufweisen und das Rollmittel (10) um den Vorsprung (8) drehbar gelagert ist.

9. Sitzverstellvorrichtung nach einem der vorhergehenden Ansprüche, wobei das erste Betätigungsmittel (2) kraft-, form- und/oder stoffschlüssig mit der Lehnenneigungsverstellvorrichtung (1) verbunden und insbesondere verschweißt ist.

10. Sitzverstellvorrichtung nach einem der vorhergehenden Ansprüche, wobei das erste Betätigungsmittel (2) mit der Lehnenneigungsverstellvorrichtung (1) drehfest verbunden ist, wobei bevorzugt das erste Betätigungsmittel (2) mit der Lehnenneigungsverstellvorrichtung (1) über die Drehachse der Lehnenneigungsverstellvorrichtung (1) verbunden ist.

11. Sitzverstellvorrichtung nach einem der vorhergehenden Ansprüche, wobei das zweite Betätigungsmittel (3) drehbar über eine senkrecht zu der Haupterstreckungsebene stehende Drehachse mit dem Sitzteil und/oder mit dem Beschlagteil des Sitzteils verbunden ist.

12. Sitzverstellvorrichtung nach einem der vorhergehenden Ansprüche, wobei das zweite Betätigungsmittel (3) eine Haupterstreckungsrichtung in der Haupterstreckungsebene aufweist, wobei das zweite Betätigungsmittel (3) an einem Ende der Haupterstreckungsrichtung mit dem Sitzteil und/oder dem Beschlagteil des Sitzteils drehbar verbunden ist und an dem anderen Ende der Haupterstreckungsrichtung mit der Sitzlängspositionsfeststellvorrichtung (4) verbunden ist.

13. Sitzverstellvorrichtung nach einem der vorhergehenden Ansprüche, wobei die Sitzverstellvorrichtung derart ausgebildet ist, dass das erste Betätigungsmittel (2) und das zweite Betätigungsmittel (3) in einer Ausgangsstellung keine gemeinsamen Berührungspunkte aufweisen und ein Zusammenwirken des ersten Betätigungsmittels (2) mit dem zweiten Betätigungsmittel (3) erst ab einem Mindestverstellweg des ersten Betätigungsmittels (2) vorgesehen ist.

## Claims

1. Seat adjusting device, in particular for a vehicle seat, wherein the seat adjusting device has a coupling means for coupling a backrest inclination adjusting device (1) to a seat longitudinal position fixing device (4), wherein the coupling means has at least one first actuating means (2) and a second actuating means (3), wherein the second actuating means (3) has a guide surface (9), wherein the first actuating means (2) is connected to the backrest inclination adjusting device (1) or to a backrest part, wherein the second actuating means (3) is connected to the seat longitudinal position fixing device (4), and wherein the coupling means is configured in such a manner that, when the backrest inclination adjusting device (1) is actuated, the first actuating means (2) interacts with the guide surface (9) of the second actuating means (3) in order to actuate the seat longitudinal position fixing device (4), **characterized in that** the first actuating means (2) has a projection (8), wherein the projection (8) is provided in a manner such that it can interact with the guide surface (9) of the second actuating means (3), wherein the projection (8) is in contact with the guide surface (9) after a certain minimum adjustment distance, and wherein the guide surface (9) has an irregular curvature.

2. Seat adjusting device according to Claim 1, wherein the coupling means is of modular design, wherein in particular the first and second actuating means (2, 3) are designed as separate means.

3. Seat adjusting device according to either of the preceding claims, wherein the first actuating means (2) and the second actuating means (3) are each formed in a substantially flat manner, wherein preferably a main plane of extent of the first actuating means (2) is formed parallel to a main plane of extent of the second actuating means (3) .

4. Seat adjusting device according to Claim 3, wherein the main plane of extent of the first actuating means (2) and the main plane of extent of the second actuating means (3) are spaced apart from each other.

5. Seat adjusting device according to one of the preceding claims, wherein the seat adjusting device is designed in such a manner that, when the backrest inclination adjusting device (1) is actuated, the first actuating means (2) interacts with the guide surface (9) of the second actuating means (3) in such a manner that, after a critical adjustment position of the first actuating means (2), the position of the second actuating means (3) remains constant.

6. Seat adjusting device according to one of the preceding claims, wherein the projection (8) is arranged perpendicularly to the main plane of extent of the first actuating means (2).

7. Seat adjusting device according to Claim 6, wherein a rolling means (10) in the form of a cylinder jacket is arranged circumferentially around the projection (8).

8. Seat adjusting device according to Claim 7, wherein the projection (8) and the rolling means (10) have a common centre axis, and the rolling means (10) is mounted rotatably about the projection (8).

9. Seat adjusting device according to one of the preceding claims, wherein the first actuating means (2) is connected, and in particular is welded, to the backrest inclination adjusting device (1) in a force-fitting, form-fitting and/or integrally bonded manner.

10. Seat adjusting device according to one of the preceding claims, wherein the first actuating means (2) is connected to the backrest inclination adjusting device (1) for rotation therewith, wherein preferably the first actuating means (2) is connected to the backrest inclination adjusting device (1) via the axis of rotation of the backrest inclination adjusting device (1).

11. Seat adjusting device according to one of the preceding claims, wherein the second actuating means (3) is connected rotatably to the seat part and/or to the fitting part of the seat part via an axis of rotation, which is perpendicular to the main plane of extent.

12. Seat adjusting device according to one of the preceding claims, wherein the second actuating means (3) has a main direction of extent in the main plane of extent, wherein the second actuating means (3) is connected rotatably to the seat part and/or to the fitting part of the seat part at one end of the main direction of extent and is connected to the seat longitudinal position fixing device (4) at the other end of the main direction of extent.

13. Seat adjusting device according to one of the preceding claims, wherein the seat adjusting device is designed in such a manner that the first actuating means (2) and the second actuating means (3) do not have any common contact points in an initial position, and interaction of the first actuating means (2) with the second actuating means (3) is provided only after a minimum adjustment distance of the first actuating means (2) .

## Revendications

1. Dispositif de réglage de siège, notamment de siège de véhicule, le dispositif de réglage de siège comprenant un moyen d'accouplement destiné à accoupler un dispositif d'inclinaison de dossier (1) à un dispositif de verrouillage de position longitudinale de siège (4), le moyen d'accouplement comprenant au moins un premier moyen d'actionnement (2) et un deuxième moyen d'actionnement (3), le deuxième moyen d'actionnement (3) possédant une surface de guidage (9), le premier moyen d'actionnement (2) étant relié au dispositif d'inclinaison de dossier (1) ou à un élément de dossier, le deuxième moyen d'actionnement (3) étant relié au dispositif de verrouillage de position longitudinale de siège (4) et le moyen d'accouplement étant conçu de telle sorte que, lors de l'actionnement du dispositif de réglage d'inclinaison de dossier (1), le premier moyen d'actionnement (2) coopérant avec la surface de guidage (9) du deuxième moyen d'actionnement (3) pour actionner le dispositif de verrouillage de position longitudinale de siège (4), **caractérisé en ce que**
le premier moyen d'actionnement (2) comporte une saillie (8), la saillie (8) étant destinée à coopérer avec la surface de guidage (9) du deuxième moyen d'actionnement (3), la saillie (8) se trouvant en contact avec la surface de guidage (9) à partir d'un certain trajet de réglage minimal et la surface de guidage (9) ayant une courbure irrégulière.

2. Dispositif de réglage de siège selon la revendication 1, le moyen d'accouplement étant modulaire, les premier et deuxième moyens d'actionnement (2, 3) étant en particulier conçus comme des moyens séparés.

3. Dispositif de réglage de siège selon l'une des revendications précédentes, le premier moyen d'actionnement (2) et le deuxième moyen d'actionnement (3) étant chacun sensiblement bidimensionnels, un plan d'extension principal du premier moyen d'actionnement (2) étant de préférence formé parallèlement à un plan d'extension principal du deuxième moyen d'actionnement (3) .

4. Dispositif de réglage de siège selon la revendication 3, le plan d'extension principal du premier moyen d'actionnement (2) et le plan d'extension principal du deuxième moyen d'actionnement (3) étant espacés l'un de l'autre.

5. Dispositif de réglage de siège selon l'une des revendications précédentes, le dispositif de réglage de siège étant formé de telle sorte que, lors de l'actionnement du dispositif de réglage d'inclinaison de siège (1), le premier moyen d'actionnement (2) coopère avec la surface de guidage (9) du deuxième moyen d'actionnement (3) de telle sorte que, à partir d'une position de réglage critique du premier moyen d'actionnement (2), la position du deuxième moyen d'actionnement (3) reste constante.

6. Dispositif de réglage de siège selon l'une des revendications précédentes, la saillie (8) étant disposée perpendiculairement au plan d'extension principal du premier moyen d'actionnement (2).

7. Dispositif de réglage de siège selon la revendication 6, un moyen de roulement en forme de chemise de cylindre (10) étant disposé circonférentiellement autour de la saillie (8).

8. Dispositif de réglage de siège selon la revendication 7, la saillie (8) et le moyen de roulement (10) ayant un axe central commun et le moyen de roulement (10) étant monté à rotation sur la saillie (8) .

9. Dispositif de réglage de siège selon l'une des revendications précédentes, le premier moyen d'actionnement (2) étant relié par une liaison à complémentarité de formes, en force et/ou de matière, et en particulier soudé, au dispositif de réglage d'inclinaison de dossier (1).

10. Dispositif de réglage de siège selon l'une des revendications précédentes,
le premier moyen d'actionnement (2) étant relié de manière rotative au dispositif de réglage d'inclinaison de dossier (1), le premier moyen d'actionnement (2) étant de préférence relié au dispositif de réglage d'inclinaison de dossier (1) par le biais de l'axe de rotation du dispositif de réglage d'inclinaison de dossier (1).

11. Dispositif de réglage de siège selon l'une des revendications précédentes, le deuxième moyen d'actionnement (3) étant relié de manière rotative à l'assise et/ou à la ferrure de l'assise par le biais d'un axe de rotation perpendiculaire au plan d'extension principal.

12. Dispositif de réglage de siège selon l'une des revendications précédentes, le deuxième moyen d'actionnement (3) présentant une direction d'extension principale dans le plan d'extension principal, le deuxième moyen d'actionnement (3) étant relié de manière rotative à l'assise et/ou à la ferrure de l'assise à une extrémité de la direction d'extension principale et étant relié au dispositif de verrouillage de position longitudinale de siège (4) à l'autre extrémité de la direction d'extension principale.

13. Dispositif de réglage de siège selon l'une des revendications précédentes,
le dispositif de réglage de siège étant conçu de telle sorte que le premier moyen d'actionnement (2) et le deuxième moyen d'actionnement (3) ne comportent dans une position initiale aucun point de contact commun et qu'une coopération du premier moyen d'actionnement (2) avec le deuxième moyen d'actionnement (3) soit prévue uniquement à partir d'un trajet de réglage minimal du premier moyen d'actionnement (2).
